# FASCICULE DE BREVET EUROPEEN

(11) **EP 3 921 526 B1**
(45) Date de publication et mention de la délivrance du brevet: **29.03.2023**
(21) Numéro de dépôt: 20714672.1
(22) Date de dépôt: 07.02.2020
(51) Int. Cl.: F02C 7/045

(54) **SOUFFLANTE DE TURBOMACHINE**
TURBOMASCHINENGEBLÄSE
TURBOMACHINE FAN

(30) Priorité: 07.02.2019 FR 1901235
(43) Date de publication de la demande: 15.12.2021
(73) Titulaire: SAFRAN AIRCRAFT ENGINES, 75015 Paris (FR)
(72) Inventeur: SIRAJ, Anwer, 77550 Moissy-Cramayel (FR); BOUROLLEAU, Clément, 77550 Moissy-Cramayel (FR); DOMINGUES, Serge, 77550 Moissy-Cramayel (FR); FIORE, Vincent, Pascal, 77550 Moissy-Cramayel (FR); ROGNIN, Florent, Louis, André, 77550 Moissy-Cramayel (FR)
(74) Mandataire: Ernest Gutmann - Yves Plasseraud S.A.S.
(86) Numéro de dépôt international: PCT/FR2020/000027
(87) Numéro de publication internationale: WO 2020/161403

(56) Documents cités:
- WO-A2-2014/197035
- DE-A1-102015 113 685
- FR-A1- 2 975 735
- US-A- 5 259 724
- US-A1- 2006 169 533

## Description

### Domaine technique de l'invention

La présente invention concerne un ensemble annulaire ainsi qu'une soufflante et une turbomachine équipée d'un tel ensemble annulaire.

### Présentation de l'invention

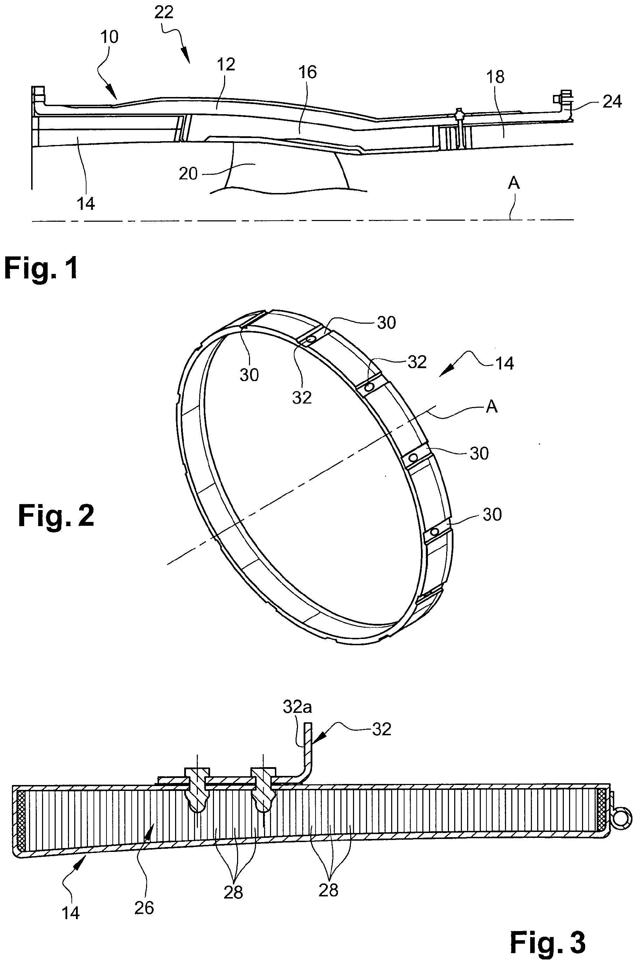

La figure 1 représente un ensemble annulaire 10 d'axe longitudinal A selon la technique connue, laquelle comprend un carter 12 qui est une pièce annulaire structurante supportant sur sa face radialement interne, une succession longitudinale de panneaux 14, 16, 18. A l'extrémité amont, un panneau acoustique 14 annulaire monobloc est disposé, de manière à réduire les émissions sonores vers l'amont. On observe qu'une roue de soufflante 20 est agencée en aval du panneau amont 14 et est entourée par un panneau 16 de support d'un matériau abradable visant à limiter les circulations d'air en sommet des aubes de la roue 20 de la soufflante. Le carter 12 de soufflante, ainsi appelé de manière courante, comprend, à son extrémité aval, une bride annulaire 24 radiale fixée sur une bride annulaire radiale correspondante d'un carter intermédiaire de la turbomachine, comportant des moyens d'accrochage à l'avion.

La figure 2 illustre, en perspective, le panneau acoustique 14 de l'extrémité amont de la soufflante 22. La figure 3 illustre, quant à elle, le même panneau acoustique 10 en coupe. Le panneau acoustique 14 comprend une structure alvéolaire 26, par exemple du type en nid d'abeille, les alvéoles 28 étant orientées radialement. Les alvéoles 28 sont recouvertes d'un tissu carbone, par une technique de drappage.

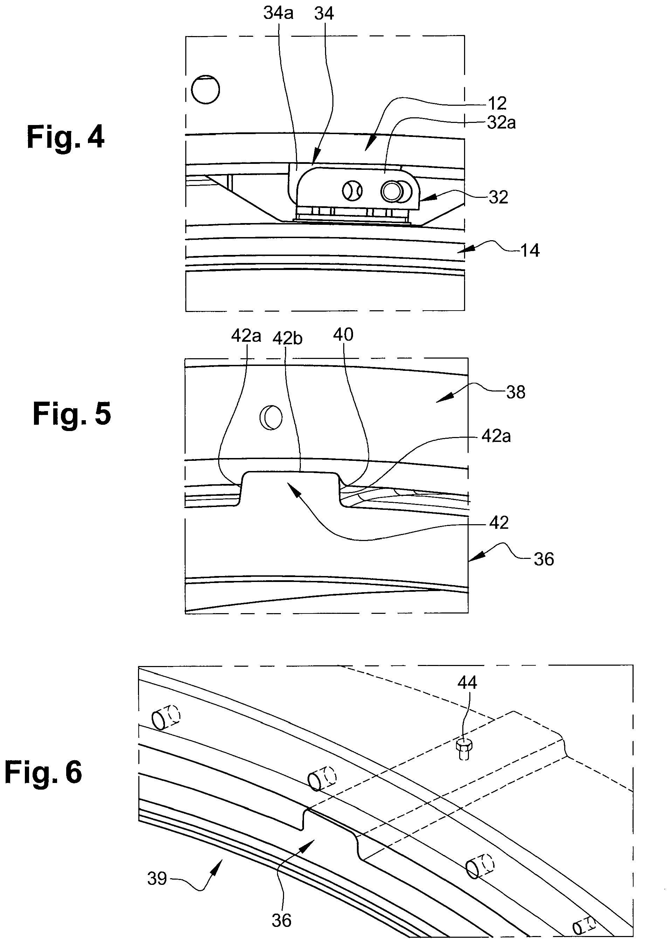

Pour assurer la fixation du panneau acoustique 14 au carter 12, des évidements 30 ou rainures sont réalisées sur sa face radialement externe et logent chacun une patte 32 de fixation métallique en L. Chaque patte 32 est fixée par rivetage au travers du panneau 14 et comprend une partie radialement externe 32a fixée par boulonnage sur une partie radiale 34a d'une patte 34 métallique du carter 12 de la soufflante 22 (figure 4).

Ce type de montage est généralement réalisé au moyen d'au moins une dizaine de couples de pattes métalliques 32, 34, ce qui nécessite un temps de montage long et complique l'opération en elle-même. Par ailleurs, lors d'opération de maintenance, le nombre important d'éléments de liaison s'avère problématique au regard du temps nécessaire à la manipulation de ces éléments. Egalement, ces fixations induisent un hyperstatisme de fixation du carter 12 avec le panneau acoustique 14 induisant une surcontrainte statique dans les liaisons boulonnées des pattes 32, 34, une compression anormale des joints de liaisons des panneaux. Enfin, la réalisation de rainures complique fortement le processus de fabrication du panneau acoustique puisqu'il est nécessaire d'avoir une variation de la dimension radiale de la structure alvéolaire.

Le document WO2014197035A2 concerne un moteur à réducteur de turboréacteur à double flux, qui comprend un premier rotor, un réacteur, un second rotor, un train d'engrenages, un carter de réacteur, une nacelle et une pluralité de segments de revêtement acoustique distincts.

Le document US2006169533 concerne un conduit de traitement de fluide, tel qu'un conduit d'admission de moteur de turbine comprenant un revêtement acoustique.

Le document FR2975735A1 concerne un carter de soufflante de turbomachine en matériau composite comprenant un renfort fibreux densifié par une matrice est formé en une seule pièce avec des nervures qui font saillie à la face interne et/ou à la face externe du carter. L'invention a notamment pour but d'apporter une solution simple, efficace et économique aux problèmes précités.

### Résumé de l'invention

Le document concerne un ensemble annulaire d'axe longitudinal pour turbomachine comprenant un carter en matériau composite tissé portant sur sa face radialement interne un panneau acoustique à structure alvéolaire recouverte d'un matériau composite, caractérisé en ce que le carter comprend au moins un renfoncement radial dans lequel est engagé au moins une partie en saillie radialement vers l'extérieur de la face radialement externe du panneau acoustique annulaire.

Selon l'agencement technologique proposé, la liaison entre le carter et le panneau acoustique est réalisée par coopération de forme et permet de bloquer le panneau acoustique relativement au carter. La réalisation du renfoncement radial sur le carter peut être réalisée lors du tissage du carter à l'aide d'une contre-forme, ce qui n'induit aucun risque de sectionner des fibres. Les parties en saillie du panneau acoustique peuvent être réalisées par moulage (lors du drappage), ce qui s'avère simple à réaliser. La structure alvéolaire peut désormais présenter une épaisseur uniforme en direction circonférentielle, ce qui facilite sa fabrication. Il est ainsi possible d'avoir recours à une pluralité de secteurs de structure alvéolaire juxtaposé les uns aux autres. Le panneau acoustique peut être sectorisé mais est de préférence formée d'une seule pièce sur 360°.

Chaque partie en saillie peut être formée par une nervure longitudinale.

Chaque renfoncement peut présenter une forme complémentaire d'une partie en saillie. Plus particulièrement, chaque renfoncement et chaque partie en saillie peut présenter en direction longitudinale une section sensiblement uniforme, de manière à faciliter le montage du panneau par translation sur le carter. Par exemple, chaque partie en saillie peut avoir une section sensiblement rectangulaire et s'étendre longitudinalement d'une extrémité à l'autre du panneau.

Pour éviter tout mouvement axial du panneau relativement au carter dans le cas où les formes relatives des parties en saillie et des renfoncements du carter ne permettraient pas d'éviter ce mouvement, un organe de liaison du carter au panneau acoustique peut alors traverser depuis l'extérieur le carter et être inséré dans chaque partie en saillie du panneau acoustique. Chaque partie en saillie, qui peut être une nervure, présente deux faces latérales reliées l'une à l'autre par une face de fond, lesdites deux faces latérales étant sensiblement planes et inclinées l'une relativement à l'autre de manière à converger l'une vers l'autre en allant radialement vers l'extérieur. Cette conformation particulière des nervures en conjugaison avec une forme complémentaire des renfoncements du carter permet de faciliter le montage du panneau acoustique.

Egalement, le panneau acoustique peut comprendre au moins trois parties en saillie chacune formées par une nervure longitudinale, les nervures étant régulièrement réparties autour de l'axe longitudinal de l'ensemble annulaire.

Egalement, une bande anti-usure peut être appliquée sur chacune des faces latérales d'une nervure. Cela permet de limiter l'usure des renfoncements du carter par frottement du panneau acoustique, en fonctionnement, du fait des vibrations de la turbomachine. L'utilisation de bande anti-usure, en téflon par exemple s'avère intéressante pour éviter entre le composite du carter et le composite du panneau acoustique.

Dans un exemple de réalisation, le carter est réalisé par tissage de fibres de carbone et injection de résine.

Le document concerne aussi une soufflante d'une turbomachine comprenant un ensemble annulaire comme indiquée ci-dessus et au moins une roue de soufflante entourée par le carter et agencée en aval du panneau acoustique. Il vise également une turbomachine comprenant une telle soufflante.

L'invention sera mieux comprise et d'autres détails, caractéristiques et avantages de l'invention apparaîtront à la lecture de la description suivante faite à titre d'exemple non limitatif en référence aux dessins annexés.

### Brève description des figures

[Fig. 1], déjà décrite précédemment, est une vue schématique en perspective d'une soufflante d'une turbomachine selon la technique connue ;
[Fig. 2], la figure 2, déjà décrite précédemment, est une vue schématique d'un panneau acoustique annulaire agencé à l'extrémité amont d'une soufflante telle que représentée en figure 1 ;
[Fig. 3], déjà décrite précédemment, est une schématique en coupe longitudinale d'un panneau acoustique montrant les moyens de fixation du panneau acoustique ;
[Fig. 4], déjà décrite précédemment, est un une vue schématique de la fixation du panneau acoustique à un carter externe ;
[Fig. 5] et
[Fig. 6] sont des vues schématiques du principe d'assemblage d'un panneau acoustique avec un carter selon l'invention ;
[Fig. 7], est une vue schématique d'un panneau acoustique destiné à être utilisé dans une manche d'entrée d'air selon l'invention ;
[Fig. 8], est une vue schématique d'un carter destiné à être utilisé dans un ensemble annulaire selon l'invention,
[Fig. 9], est une vue à plus grande échelle de la zone délimitée en pointillée sur la figure 8.

### Description détaillée de l'invention

On se réfère maintenant aux figures 5 à 8 qui représentent la liaison du panneau acoustique 36 et d'un carter 38 dans un ensemble annulaire 39 selon l'invention.

Il est ainsi proposé de réaliser des renfoncements longitudinaux 40 ou axiaux sur la face interne du carter 38 lequel est réalisé par tissage de fibres de carbone et injection de résine. Ces renfoncements longitudinaux 40 forment des rainures à section sensiblement rectangulaire. La section des rainures est sensiblement constante en direction longitudinale A. Le panneau acoustique 36 comprend une structure interne alvéolaire (non représentée) similaire à ce qui a été décrit en référence à la technique antérieure, avec des alvéoles orientées selon la direction radiale et recouverte d'une couche d'un matériau composite en fibre de carbone ou de verre. Le panneau acoustique 36 comprend des parties en saillie 42 formées par des nervures longitudinales ou axiales. Chaque nervure 42 présente une section sensiblement uniforme d'une extrémité axiale à l'autre du panneau acoustique 36. La section peut avoir une forme sensiblement rectangulaire, bien qu'il sera noté que les flancs peuvent être inclinés comme cela sera précisé ci-après.

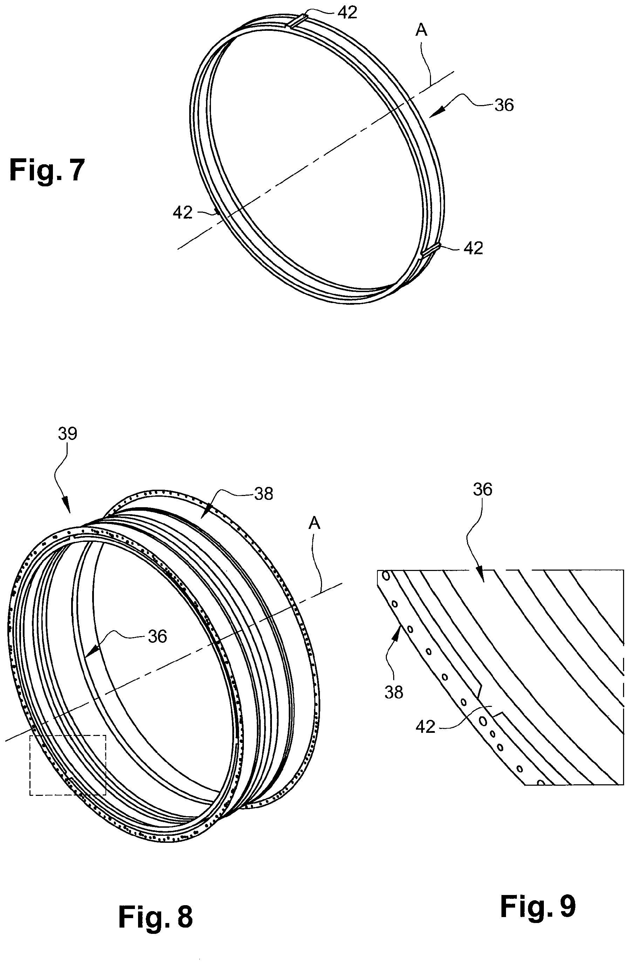

Comme cela est représenté sur la figure 7 et sur la figure 8, les nervures 42 peuvent être régulièrement réparties autour de l'axe longitudinal A et peuvent être au nombre de trois de même que les rainures 38 du carter.

Ainsi conformés, les renfoncements 40 du carter 38 et les nervures 42 du panneau acoustique 36 présentent des formes complémentaires qui permettent un engagement axial du panneau acoustique 36 à l'intérieur du carter 38 par coulissement des nervures 42 du panneau acoustique 36 dans les rainures 40 du carter 38.

Comme on peut l'observer sur les figures 5 et 6, chaque nervure 42 comprend deux faces latérales 42a, c'est-à-dire deux faces d'extrémités circonférentielles, chaque face 42a s'étendant longitudinalement. Par ailleurs, les deux faces latérales 42a d'une nervure 42 sont sensiblement planes et inclinées l'une relativement à l'autre de manière à converger l'une vers l'autre en allant radialement vers l'extérieur. Les faces latérales 42a d'une nervure 42 sont reliées l'un à l'autre par une face de fond 42b. Dans cette configuration, chaque rainure 40 du carter 38 présente alors une forme complémentaire avec des faces également inclinées en oblique. Cette conformation permet de faciliter le montage du panneau acoustique 36.

Pour éviter tout mouvement longitudinal du panneau acoustique 36 dans le carter 38, on prévoit des organes 44 de blocage du panneau acoustique 36 sur le carter 38. Ainsi, un organe de fixation 44 est inséré depuis l'extérieur du carter 38 et de manière à venir s'insérer dans une nervure 42 du panneau acoustique 38. Plus précisément, chaque organe 44 de fixation traverse le carter 38, puis la face de fond 42b d'une nervure 42 et est inséré dans la structure alvéolaire du panneau acoustique 36. L'organe de fixation 44 peut être un insert tel qu'un rivet aveugle.

Chaque face latérale 42a d'une nervure 42 peut être recouverte d'une bande anti-usure visant à limiter l'usure du carter 38 du fait des vibrations du panneau acoustique 36, en fonctionnement. Ces bandes anti-usures peuvent être réalisées en téflon par exemple.

La liaison du panneau acoustique 36 au carter 38 proposée dans le présent document permet d'utiliser une structure alvéolaire présentant une épaisseur constante en direction circonférentielle, ce qui facilite la fabrication du panneau acoustique 36 ainsi que son assemblage. Par ailleurs, on améliore l'atténuation acoustique réalisé par la structure alvéolaire.

## Revendications

1. Ensemble annulaire (39) d'axe longitudinal (A) pour turbomachine, comprenant un carter (38) portant sur sa face radialement interne un panneau acoustique (36) à structure alvéolaire recouverte d'un matériau composite, le carter (38) comprenant au moins un renfoncement radial (40) dans lequel est engagé au moins une partie en saillie (42) radialement vers l'extérieur de la face radialement externe du panneau acoustique (36) annulaire, et chaque partie en saillie étant formée par une nervure longitudinale, et chaque nervure (42) présente deux faces latérales (42a) reliées l'une à l'autre par une face de fond (42b), **caractérisé en ce que** lesdites deux faces latérales sont sensiblement planes et inclinées l'une relativement à l'autre de manière à converger l'une vers l'autre en allant radialement vers l'extérieur et **en ce que** le carter est en matériau composite tissé.

2. Ensemble annulaire selon la revendication 1, dans laquelle chaque renfoncement (40) présente une forme complémentaire d'une partie en saillie (42).

3. Ensemble annulaire selon la revendication 1 ou 2, dans laquelle le panneau acoustique (36) comprend au moins trois nervures longitudinales (42) régulièrement réparties autour de l'axe longitudinal (A).

4. Ensemble annulaire selon l'une des revendications 1 à 3, dans laquelle une bande anti-usure est appliquée sur chacune des faces latérales (42a) d'une nervure (42).

5. Ensemble annulaire selon l'une des revendications précédentes, dans laquelle un organe (44) de liaison du carter (38) au panneau acoustique (36) traverse depuis l'extérieur le carter (38) et est inséré dans chaque partie en saillie du panneau acoustique (36).

6. Ensemble annulaire selon l'une des revendications précédentes, dans laquelle chaque renfoncement (40) et chaque partie en saillie (42) présentent en direction longitudinale une section sensiblement uniforme.

7. Ensemble annulaire selon l'une des revendications 1 à 6, dans laquelle le carter (38) est réalisé par tissage de fibres de carbone et injection de résine.

8. Soufflante d'une turbomachine comprenant un ensemble annulaire (39) selon l'une des revendications précédentes et au moins une roue de soufflante agencée en aval du panneau acoustique annulaire (36) et entouré par le carter (38).

9. Turbomachine comprenant une soufflante selon la revendication 8.

## Patentansprüche

1. Ringförmige Anordnung (39) mit Längsachse (A) für eine Turbomaschine, enthaltend ein Gehäuse (38), das auf seiner radial inneren Seite eine Akustikplatte (36) mit Wabenstruktur trägt, die mit einem Verbundmaterial bedeckt ist,
wobei das Gehäuse (38) zumindest eine radiale Vertiefung (40) aufweist, in die zumindest ein von der radial äußeren Seite der ringförmigen Akustikplatte (36) radial nach außen vorspringender Abschnitt (42) eingreift, und wobei jeder vorspringende Abschnitt aus einer Längsrippe gebildet ist und jede Rippe (42) zwei Seitenflächen (42a) aufweist, die durch eine Bodenfläche (42b) miteinander verbunden sind,
**dadurch gekennzeichnet, dass** die beiden Seitenflächen im Wesentlichen eben und relativ zueinander so geneigt sind, dass sie radial nach außen aufeinander zu konvergieren, und dass das Gehäuse aus gewebtem Verbundmaterial besteht.

2. Ringförmige Anordnung nach Anspruch 1,
wobei jede Vertiefung (40) eine komplementäre Form zu einem vorspringenden Abschnitt (42) aufweist.

3. Ringförmige Anordnung nach Anspruch 1 oder 2,
wobei die Akustikplatte (36) zumindest drei Längsrippen (42) aufweist, die gleichmäßig um die Längsachse (A) verteilt sind.

4. Ringförmige Anordnung nach einem der Ansprüche 1 bis 3,
wobei auf jede der Seitenflächen (42a) einer Rippe (42) ein Verschleißschutzstreifen aufgebracht ist.

5. Ringförmige Anordnung nach einem der vorhergehenden Ansprüche, wobei ein Verbindungsorgan (44) zur Verbindung des Gehäuses (38) mit der Akustikplatte (36) von außen durch das Gehäuse (38) hindurchgeht und in jedem vorspringenden Abschnitt der Akustikplatte (36) eingefügt ist.

6. Ringförmige Anordnung nach einem der vorhergehenden Ansprüche, wobei jede Vertiefung (40) und jeder vorspringende Abschnitt (42) in Längsrichtung einen im Wesentlichen gleichförmigen Querschnitt aufweisen.

7. Ringförmige Anordnung nach einem der Ansprüche 1 bis 6,
wobei das Gehäuse (38) durch Verweben von Kohlenstofffasern und Einspritzen von Harz hergestellt ist.

8. Gebläse einer Turbomaschine mit einer ringförmigen Anordnung (39) nach einem der vorhergehenden Ansprüche und mit zumindest einem Gebläserad, das der ringförmigen Akustikplatte (36) nachgelagert und von dem Gehäuse (38) umgeben ist.

9. Turbomaschine mit einem Gebläse nach Anspruch 8.

## Claims

1. A ring assembly (39) of longitudinal axis (A) for a turbomachine, comprising a housing (38) carrying on its radially inner face an acoustic panel (36) with a cellular structure covered with a composite material, the housing (38) comprising at least one radial recess (40) in which at least one protruding part (42) projecting radially towards the outside of the radially outer face of the annular acoustic panel (36) is engaged and each projecting portion being formed by a longitudinal rib, and each rib (42) has two side faces (42a) connected to each other by a bottom face (42b), **characterized in that** said two side faces are substantially flat and inclined relative to each other so as to converge towards each other in a radially outward direction and **in that** the housing is made of woven composite material.

2. The ring assembly of claim 1, wherein each recess (40) has a complementary shape to said one protruding part (42).

3. A ring assembly according to claim 1 or 2, wherein the acoustic panel (36) comprises at least three longitudinal ribs (42) evenly distributed around the longitudinal axis (A).

4. The ring assembly of any one of claims 1 to 3, wherein a wear strip is applied to each of the side faces (42a) of a rib (42).

5. A ring assembly according to any of the preceding claims, wherein a member (44) for connecting the housing (38) to the acoustic panel (36) passes through the housing (38) from the outside and is inserted into each projecting portion of the acoustic panel (36).

6. A ring assembly according to any of the preceding claims, wherein each recess (40) and each protruding part (42) has a substantially uniform cross-section in the longitudinal direction.

7. A ring assembly according to any one of claims 1 to 6, wherein the housing (38) is made by weaving carbon fibres and injecting resin.

8. A turbomachine fan comprising a ring assembly (39) according to one of the preceding claims and at least one fan wheel arranged downstream of the annular acoustic panel (36) and surrounded by the housing (38).

9. A turbomachine comprising a fan as claimed in claim 8.
